**Europäisches Patentamt**

**European Patent Office**

**Office européen des brevets**

(11) Numéro de publication: **0 165 122**
**B1**

(12) **FASCICULE DE BREVET EUROPÉEN**

(45) Date de publication du fascicule du brevet:
**02.08.89**

(51) Int. Cl.⁴: **H 04 L 7/02,** H 04 J 3/07

(21) Numéro de dépôt: **85400920.6**

(22) Date de dépôt: **10.05.85**

(54) Circuit de synchronisation dans un multiplexeur de signaux numériques plésiochrones.

(30) Priorité: **11.05.84 FR 8407369**

(43) Date de publication de la demande:
**18.12.85 Bulletin 85/51**

(45) Mention de la délivrance du brevet:
**02.08.89 Bulletin 89/31**

(84) Etats contractants désignés:
**DE GB IT NL**

(56) Documents cité:
**US-A-4 002 844**

**1976 INTERNATIONAL ZURICH SEMINAR ON DIGITAL COMMUNICATIONS, Zurich, 9-11 mars 1976, pages A2-1 - A2-4, IEEE, New York, US; A. AVENEAU et al.: "Possibilities given by the use of large scale integrated circuits in the 2048-8448 kbit/s multiplexer-demultiplexer"**
**IEEE INTERNATIONAL CONFERENCE ON COMMUNICATIONS, Boulder, Colorado, 9-11 juin 1969, pages 34-1 - 34-7, édité R.K. Salaman, New York, US; R.A. BRUCE: "A 1.5 to 6 megabit digital multiplex employing pulse stuffing"**

(73) Titulaire: **SOCIETE ANONYME DE TELECOMMUNICATIONS, 41, rue Cantagrel, F-75624 Paris Cedex 13 (FR)**

(72) Inventeur: **Aveneau, André Auguste, 41, rue Cantagrel, F-75631 Paris Cedex 13 (FR)**
Inventeur: **Guichard, Jean, Louis Vincent, 41, rue Cantagrel, F-75631 Paris Cedex 13 (FR)**

(74) Mandataire: **Martinet & Lapoux, 62, rue des Mathurins, F-75008 Paris (FR)**

EP 0 165 122 B1

LIBER, STOCKHOLM 1989

## Description

La présente invention concerne une synchronisation de signaux numériques plésiochrones reçus en un code bipolaire dans un multiplexeur numérique opérant par justification positive. Plus particulièrement, l'invention a trait à un circuit de synchronisation de l'un des signaux plésiochrones avec un signal d'horloge local en vue de transcoder et justifier le signal plésiochrone.

Encore plus précisément, l'invention a trait à la génération d'un signal de rythme dans des moyens d'entrée d'un tel circuit de synchronisation. De tels moyens d'entrée sont parfois appelés "jonction", comme indiqué dans l'article de André AVENEAU et Xavier BARBIER, paru dans IEEE INTERNATIONAL ZURICH SEMINAR ON DIGITAL COMMUNICATIONS, Zürich (CH), 9 - 11 mars 1976, pages A2.1 à A2.4, New-York (US), et précédent un circuit de mémorisation et de justification, par exemple comme décrit dans le brevet US-A-4 002 844.

Pour récupérer un signal de rythme correspondant au débit d'un signal plésiochrone, les moyens d'entrée dans des circuits de synchronisation connus comprennent des composants analogiques tels que des filtres qui se prêtent mal à une intégration.

Le but de la présente invention est de fournir un circuit de synchronisation dans lequel la récupération du signal de rythme est obtenue au moyen de circuits logiques permettant une intégration dans un circuit à microstructure logique.

A cette fin, un circuit de synchronisation dans un multiplexeur multiplexant N signaux numériques plésiochrones ayant une fréquence de rythme nominale sensiblement inférieure à une fréquence de rythme prédéterminée $h/(2N)$ en un signal résultant ayant une fréquence de rythme $h/2$, comprenant un oscillateur produisant un signal d'horloge local, des moyens recevant le signal d'horloge local et l'un desdits signaux plésiochrones codés en un code bipolaire pour régénérer un signal de rythme propre audit signal plésiochrone et ayant des instants significatifs synchrones avec des instants significatifs du signal d'horloge local, et des moyens de transcodage, de mémorisation et de justification recevant ledit signal plésiochrone et ledit signal de rythme régénéré pour élever la fréquence de rythme du signal plésiochrone reçu à la fréquence de rythme prédéterminée afin de synchroniser par justification ledit signal plésiochrone en un signal justifié, est caractérisé en ce les moyens pour régénérer le signal de rythme comprennent des moyens logiques pour supprimer périodiquement une impulsion dans le signal d'horloge local en fonction d'un déphasage encre le signal de rythme régénéré et le signal d'horloge local afin de produire un signal d'horloge intermédiaire ayant une impulsion périodiquement supprimée comparativement audit signal d'horloge local, et des moyens logiques pour diviser en fréquence par 2N le signal d'horloge intermédiaire en le signal de rythme régénéré.

D'autres caractéristiques de l'invention apparaîtront plus clairement à la lecture de la description suivante de réalisations préférées de l'invention en référence aux dessins annexés correspondants, dans lesquels:

- la Fig. 1 est un bloc-diagramme d'un multiplexeur multiplexant N = 4 signaux numériques plésiochrones, l'un des circuits de synchronisation dans le multiplexeur étant détaillé; et
- la Fig. 2 montre des formes d'onde de signaux établis dans le circuit de synchronisation et utilisés pour récupérer un signal de rythme relatif à un signal plésiochrone reçu.

Selon une réalisation préférée, on se réfère à un multiplexage de N = 4 signaux composants numériques plésiochrones $s_1$ à $s_4$ ayant un débit nominal faible égal à $d_0$ = 2048 kbit/s en un signal résultant numérique R ayant un débit nominal élevé égal à $D_0$ = 8448 kbit/s. Par définition, les signaux composants ont des débits réels variant de part et d'autre du débit nominal faible $d_0$ dans des limites prédéterminées en raison d'une indépendance d'horloges respectives établissant les signaux composants. Avant de procéder au multiplexage, les signaux composants $s_1$ à $s_4$ sont transformés en des signaux composants dits justifiés $s'_1$ à $s'_4$ ayant un débit commun $d'_0$ = $D_0/N$ = 2112 kbit/s dans des circuits de synchronisation respectivement. Le débit $d'_0$ est sensiblement supérieur au débit $d_0$ et est donné par la relation:

$$d'_0 = (1 + \varepsilon) \, d_0$$

où $\varepsilon$ est un nombre plus petit que l'unité et est choisi de manière que le débit $d'_0$ soit toujours supérieur à tous les débits réels des signaux composants $s_1$ à $s_4$. La différence entre le débit $d'_0$ et les débits réels des signaux composants est comblée par des bits de remplissage appelés bits de justification selon un procédé connu de multiplexage par justification positive. En pratique, la différence de débits motivant la synchronisation des signaux composants $s_1$ à $s_4$ se traduit par une insertion systématique de bits d'indication de justification ainsi que d'un mot de verrouillage de trame et, le cas échéant, de bits de service ayant des emplacements prédéterminés respectifs dans une trame du signal résultant R. Pour un signal conposant, un bit d'indication de justification est destiné à indiquer si un bit de justification occupant un emplacement prédéterminé dans la trame est transmis ou remplacé par un bit d'information, en vue d'un démultiplexage ultérieur du signal résultant.

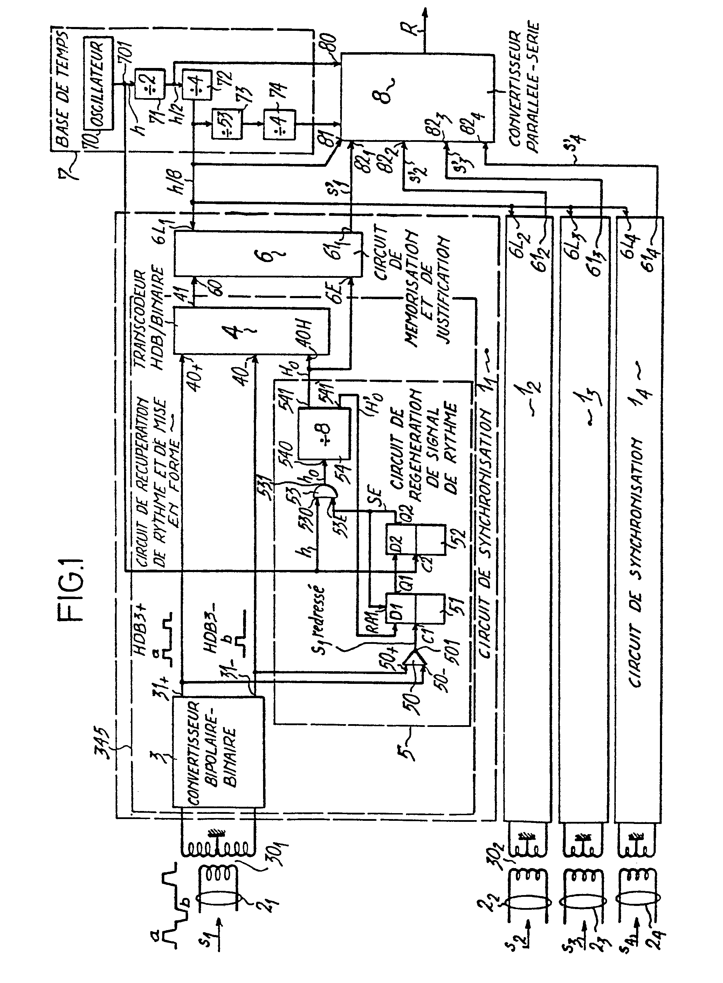

Dans la Fig. 1, est représenté en détail un circuit de synchronisation $1_1$ relatif à l'un des signaux composants $s_1$ à $s_4$, tel que le signal $s_1$, les autres circuits de synchronisation $1_2$ à $1_4$ relatifs aux signaux $s_2$ à $s_4$ étant identiques au circuit $1_1$.

Le signal composant numérique $s_1$ est transmis

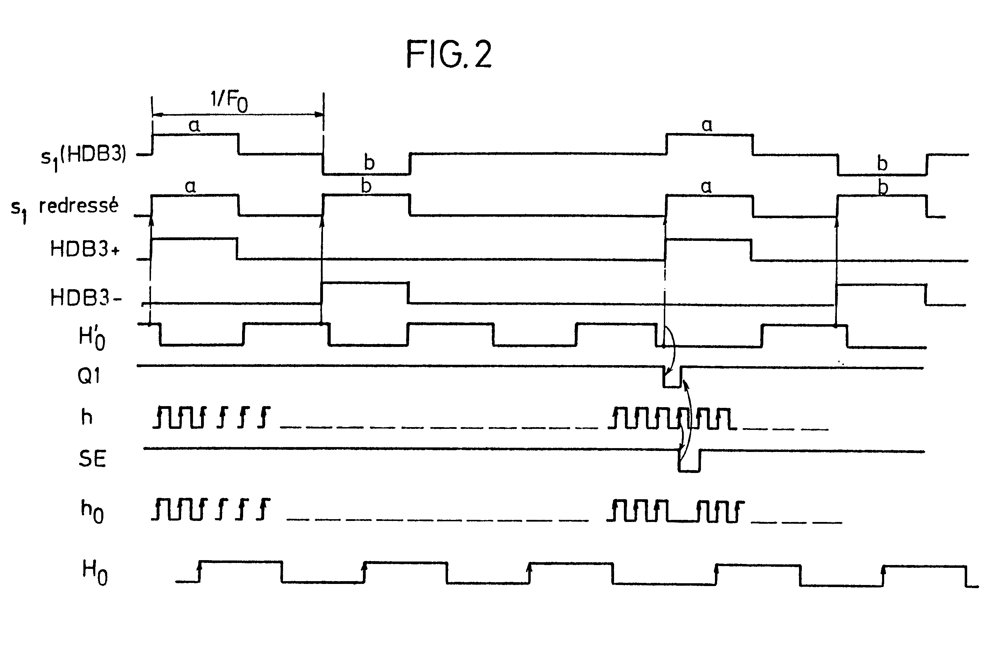

en un code bipolaire à haute densité HDBn dans une ligne à paire symétrique $2_1$. Il est rappelé qu'un signal numérique en code HDBn est un signal bipolaire dans lequel un zéro binaire est codé comme un "0" et un binaire est codé alternativement comme une marque a de polarité positive ou une marque b de polarisation négative, comme montré dans une première ligne de la Fig. 2. n désigne un entier prédéterminé indiquant le nombre maximum de zéros consécutifs qui peuvent se trouver dans le signal bipolaire. Dans une suite de $(n + 1)$ zéros consécutifs du signal binaire initial, le dernier bit est remplacé d'une manière connue par une marque de violation de bipolarité. Généralement, le signal composant $s_1$ est transmis en un code HDB3 par la ligne $2_1$ à un convertisseur bipolaire-binaire 3 à travers un transformateur d'entrée $30_1$. Deux sorties $31_+$ et $31_-$ du convertisseur 3 appliquent respectivement deux signaux binaires $HDB3_+$ et $HDB3_-$ à deux entrées $40_+$ et $40_-$ d'un transcodeur 4 et à deux entrées $50_+$ et $50_-$ d'une porte OU 50 incluse dans un circuit de régénération de signal de rythme 5. Les signaux $HDB3_+$ et $HDB3_-$ sont montrés dans des troisième et quatrième lignes de la Fig. 2. Le signal $HDB3_+$ comprend des bits "1" qui correspondent aux marques positives a du signal codé $s_1$, et des bits "0" qui correspondent aux marques négatives b et aux zéros du signal codé $s_1$. Le signal $HDB3_-$ comprend des bits "1" qui correspondent aux marques négatives b du signal codé $s_1$, et des bits "0" qui correspondent aux marques positives a et aux zéros du signal codé $s_1$.

Le convertisseur 3, le transcodeur 4 et le circuit 5 constituent ensemble un circuit de récupération de rythme et de mise en forme 345 appelé parfois joncteur, qui délivre le signal reçu $s_1$ sous la forme d'un signal binaire reformé, et un signal de rythme établi à partir du signal reçu.

Une sortie 41 du transcodeur 4 transmet le signal reformé en code binaire et à une fréquence de rythme moyenne $f_0 = 2048$ kHz vers une entrée 60 d'un circuit de justification et de mémorisation 6. Le transcodage des signaux $HDB3_+$ et $HDB3_-$ en le signal binaire dans le transcodeur 4 et l'écriture du signal binaire dans une mémoire incluse dans le circuit 6 sont commandés par un signal de rythme $H_0$ régénéré par le circuit 5 et propre au signal composant $s_1$.

Comme on le verra dans la suite, le signal de rythme $H_0$ est synchronisé avec un signal d'horloge produit localement par un oscillateur 70 et ayant une fréquence h égale au double de la fréquence de rythme $h/2 = 8448$ kHz du signal résultant R, soit $h = 16 896$ kHz. L'oscillateur 70 est inclus dans une base de temps 7 du multiplexeur qui établit tous les signaux d'horloge nécessaires à l'élévation du débit $d_0$ au débit $d'_0$ et au multiplexage des signaux justifiés $s'_1$ à $s'_4$. La base de temps 7 comprend notamment un diviseur de fréquence par deux 71 et un diviseur de fréquence par quatre 72 reliés en série à une sortie 701 de l'oscillateur 70. Le premier diviseur de fréquence 71 délivre un signal d'horloge $h/2$ à la fréquence de 8448 kHz à une entrée d'horloge 80 commune aux étages d'un registre à décalage d'un convertisseur parallèle-série classique 8. Le second diviseur de fréquence 72 délivre un signal d'horloge $h/8$ à la fréquence de 2112 kHz à des entrées d'horloge de lecture $6L_1$ à $6L_4$ relatives aux mémoires tampons incluses respectivement dans les circuits de mémorisation et de justification dans les circuits de synchronisation $1_1$ à $1_4$. Le signal d'horloge $h/8$ est également appliqué à une entrée d'horloge 81 de portes ET incluses dans le convertisseur 8 et ayant des sorties respectivement connectées à des entrées des étages dudit registre à décalage. Des autres entrées $82_1$ à $82_4$ des portes ET précitées reçoivent respectivement les signaux binaires justifiés $s'_1$ à $s'_4$ transmis respectivement par des sorties $61_1$ à $61_4$ des mémoires tampons dans les circuits de synchronisation $1_1$ à $1_4$.

Le circuit 6 comprend d'une manière connue, outre la mémoire tampon, des moyens de demande de justification, des moyens de lecture pour ordonner des justifications et un circuit de comparaison de phase. Le circuit 6 est destiné à élever le débit initial $d_0$ au débit $d'_0$ en insérant systématiquement des bits d'indication de justification et, à la demande, des bits de justification dans le signal binaire reformé à la sortie 41 du transcodeur 4. Les bits du signal reformé sont écrits dans la mémoire tampon du circuit 6 sous la commande du signal $H_0$ appliqué à une entrée d'horloge d'écriture 6E du circuit 6. Les bits du signal justifié $s'_1$ sont lus sous la commande du signal $h/8$ appliqué à l'entrée $6L_1$.

Le convertisseur parallèle-série 8 multiplexe bit à bit les $N = 4$ signaux composants justifiés $s'_1$ à $s'_4$ en le signal résultant R et insère à une fréquence de trame un mot de verrouillage de trame et de bits de service typiquement de 12 bits. Par exemple, une trame comprend 848 bits et a une fréquence FT égale à 9,95 kHz obtenue à partir d'un diviseur de fréquence par cinquante-trois 73 et d'un diviseur de fréquence par quatre 74 connectés en série avec le diviseur 72 dans la base de temps.

Le circuit de régénération de signal de rythme 5 comprend, outre la porte OU 50, deux bascules du type D 51 et 52, une porte ET 53 et un diviseur de fréquence par huit 54 du genre compteur modulo 8. Des entrées d'horloge C1 et C2 des bascules 51 et 52 sont reliées à une sortie 501 de la porte OU 50 et à la sortie 701 de l'oscillateur 70 respectivement. Des entrées D1 et D2 des bascules 51 et 52 sont reliées à une sortie 541' du diviseur de fréquence 54 et à une sortie Q1 de la bascule 51 respectivement. Une sortie Q2 de la seconde bascule 52 est reliée à une entrée de remise à un ("preset") RA1 de la première bascule 51 et une entrée 53E de la porte 53. La porte ET 53 possède une autre entrée 530 reliée à la sortie 701 de l'oscillateur 70, et une sortie 531 reliée à une entrée 540 du diviseur de fréquence 54. Une sortie 541 du diviseur de fréquence 54 transmet le signal de rythme régénéré $H_0$ à une entrée d'horloge 40H du transcodeur 4 et à l'entrée de commande d'écriture 6E du circuit 6.

Comme montré dans une dernière ligne de la Fig. 2, le signal de rythme $H_0$ présente des suites de créneaux ayant une fréquence égale à $f_0 = 2048$ kHz et a une fréquence moyenne égale au débit réel du signal composant $s_1$. Puisque par définition, les signaux composants $s_1$ à $s_4$ sont plésiochrones, les signaux de rythme régénérés respectifs, tels que le signal de rythme $H_0$ pour le signal $s_1$, ont des fréquences moyennes différentes. Le signal de rythme $H_0$ est également périodiquement en synchronisme avec le signal d'horloge local $h$ et offre des fronts montants déterminant des instants significatifs qui sont compris chacun entre des fronts montant et descendant d'une même impulsion d'un signal bipolaire HDB3 redressé produit par la sortie 501 de la porte 50 et montré dans une deuxième ligne de la Fig. 2. Le signal $H_0$ est obtenu par une division de fréquence par $2N = 8$ d'un signal d'horloge intermédiaire $h_0$ délivré par la sortie 531 de la porte 53 et montré dans une avant-dernière ligne de la Fig. 2. Comparativement au signal d'horloge $h$ établi par l'oscillateur local 70 et montré dans une septième ligne de la Fig. 2, le signal $h_0$ est composé d'impulsions synchrones des impulsions du signal $h$ et périodiquement d'une suppression d'une impulsion représentative d'un huitième de déphasage entre le signal d'écriture $H_0$ et le signal de lecture $h/8$. La suppression d'une impulsion a donc lieu à une fréquence d'effacement $2112 / (8(2112-2048))$ kHz, et est obtenue dans la porte ET 53 grâce à un signal d'effacement SE transmis par la sortie Q2 de la bascule 52 et montré dans une huitième ligne de la Fig. 2.

Le signal d'effacement SE est produit à partir d'une comparaison de phase dans la première bascule 51 entre le signal redressé $s_1$ et un signal de rythme $H'_0$ transmis par la sortie 541' du diviseur de fréquence 54. Comme montré dans une cinquième ligne de la Fig. 2, le signal est un signal déphasé de $\pi/2$ par rapport au signal $H_0$, et donc offre des fronts montants sensiblement déphasés par rapport aux fronts montants du signal redressé $s_1$. Un signal de comparaison de phase montré dans une sixième ligne de la Fig. 2 est fourni par la sortie Q1 de la bascule 51 afin qu'une seule impulsion du signal $h$ soit effacée périodiquement. Le signal d'effacement SE sert également à remettre au repos la bascule 51 et donc à "1" le signal de comparaison de phase à la sortie Q1 de la bascule 51. A travers la porte ET 53 et le diviseur de fréquence 54, le signal d'effacement SE asservit le signal $H'_0$ afin que les fronts descendants du signal $H'_0$ soient sensiblement en phase avec les fronts montants du signal redressé $s_1$, à une période du signal d'horloge local $h$ près.

Il est à noter que le circuit de synchronisation selon l'invention fait appel à un signal d'horloge $h$ ayant une fréquence égale au double de la fréquence d'horloge $h/2$ du signal R résultant du multiplexage. Ceci permet après division en fréquence par deux du signal $h$ dans le diviseur 71 de calibrer correctement les bits du signal résultant R.

Par ailleurs, le rapport peu élevé égal à $2N = 8$ entre la fréquence du signal d'horloge local $h$ et la fréquence du signal de rythme régénéré $H_0$ n'est pas préjudiciable au bon fonctionnement du multiplexeur. En effet, le signal binaire sortant du transcodeur 4 et reformé en fonction du signal est traité dans le circuit 6 qui lit le signal binaire sous la commande du signal d'horloge $h/8$ obtenu directement à partir du signal d'horloge local $h$. Le circuit de comparaison de phase dans le circuit 6 absorbe les variations de phase du signal binaire reformé. Ainsi, la fréquence d'horloge la plus élevée utilisée dans le circuit de synchronisation a une valeur qui n'excède pas une fréquence égale au double de la fréquence de rythme du signal résultant R et strictement nécessaire à un codage HDB3 du signal résultant R pour une transmission ultérieure. Plus généralement, la fréquence du signal d'horloge local peut être égale à $Kh$, où $K$ est un entier égal ou supérieur à l'unité; dans ce cas, le diviseur de fréquence 71 opère une division de fréquence par $2K$, et le diviseur de fréquence 54 opère une division de fréquence par $2NK$.

## Revendications

1. Circuit de synchronisation ($1_1$) dans un multiplexeur multiplexant N signaux numériques plésiochrones ($s_1$ à $s_N$) ayant une fréquence de rythme nominale ($f_0$) sensiblement inférieure à une fréquence de rythme prédéterminée $h/(2N)$ en un signal résultant ayant une fréquence de rythme $h/2$, comprenant un oscillateur (70) produisant un signal d'horloge local ($h$), des moyens (5) recevant le signal d'horloge local et l'un ($s_1$) desdits signaux plésiochrones codés en un code bipolaire pour régénérer un signal de rythme ($H_0$) propre audit signal plésiochrone ($s_1$) et ayant des instants significatifs (fronts montants) synchrones avec des instants significatifs du signal d'horloge local ($h$), et des moyens de transcodage, de mémorisation et de justification (4, 6) recevant ledit signal plésiochrone ($s_1$) et ledit signal de rythme régénéré ($H_0$) pour élever la fréquence de rythme nominale ($f_0$) du signal plésiochrone reçu ($s_1$) à la fréquence de rythme prédéterminée afin de synchroniser par justification ledit signal plésiochrone ($s_1$) en un signal justifié ($s'_1$), caractérisé en ce que les moyens pour régénérer le signal de rythme (5) comprennent des moyens logiques (50, 51, 52, 53) pour supprimer périodiquement une impulsion dans le signal d'horloge local ($h$) en fonction d'un déphasage entre le signal de rythme régénéré ($H_0$) et le signal d'horloge local ($h$) afin de produire un signal d'horloge intermédiaire ($h_0$) ayant une impulsion périodiquement supprimée comparativement audit signal d'horloge local ($h$), et des moyens logiques (54) pour diviser en fréquence par $2N$ le signal d'horloge intermédiaire ($h_0$) en le

signal de rythme régénéré (H$_0$).

2. Circuit de synchronisation conforme à la revendication 1, caractérisé en ce que lesdits moyens pour supprimer comprennent des moyens (3, 50) pour redresser ledit signal plésiochrone en code bipolaire (s$_1$) en un signal redressé, une première bascule (51) ayant une entrée (D1) recevant un signal de rythme (H'$_0$) déphasé de $\pi/2$ par rapport au signal de rythme régénéré (H$_0$) et fourni par lesdits moyens pour diviser en fréquence (54), et une entrée d'horloge (C1) recevant ledit signal redressé, une seconde bascule (52) ayant une entrée (D2) reliée à une sortie (Q1) de la première bascule (51), une entrée d'horloge (C2) recevant le signal d'horloge local (h) et une sortie (Q2) reliée à une entrée de remise à "1" (RA1) de la première bascule (51), et une porte ET (53) ayant une entrée (530) recevant le signal d'horloge local (h), une autre entrée (53E) reliée à la sortie (Q2) de la seconde bascule (52) et une sortie (531) appliquant ledit signal d'horloge intermédiaire (h$_0$) à une entrée (540) des moyens pour diviser en fréquence (54).

3. Circuit de synchronisation conforme à la revendication 1 ou 2, caractérisé en ce que le signal d'horloge local produit par l'oscillateur (70) a une fréquence égale à Kh, où K est un entier égal ou supérieur à l'unité, et en ce que les moyens pour diviser en fréquence (54) divisent en fréquence par 2NK.

4. Circuit de synchronisation conforme à la revendication 3, caractérisé en ce qu'il comprend un premier diviseur de fréquence par 2K (71) connecté à l'oscillateur (70) et d'autres diviseurs de fréquence (72, 73, 74) reliés au premier diviseur pour élaborer des signaux d'horloge propres à commander des opérations de justification et de multiplexage des signaux plésiochrones (s$_1$ à s$_4$).

5. Circuit de synchronisation conforme à l'une quelconque des revendications 1 à 4, caractérisé en ce que le code bipolaire est un code bipolaire à haute densité HDBn.

**Patentansprüche**

1. Synchronisierschaltung (1$_1$) in einem Multiplexer, der N-plesiochrone numerische Signale (s$_1$ bis s$_N$), aufweisend eine nominale Taktfrequenz (f$_0$), deutlich niedriger als eine vorbestimmte Taktfrequenz h/(2N), zu einem resultierenden Signal multiplext, aufweisend eine Taktfrequenz h/2, umfassend einen ein lokales Zeitsteuersignal (h) erzeugenden Oszillator (70), Mittel (5), die das lokale Zeitsteuersignal und eines (s$_1$) der plesiochronen Signale aufnehmen, die mit einem bipolaren Kode zum Regenerieren eines für das plesiochrone Signal (s$_1$) geeigneten Taktsignals (H$_0$) kodiert sind und kennzeichnende Zeitpunkte (Anstiege) synchron mit kennzeichnenden Zeitpunkten des lokalen Zeitsteuersignals (h) aufweisen, und Mittel (4, 6) zur Umkodierung, Speicherung und Ausrichtung, die das plesiochrone Signal (s$_1$) und das regenerierte Taktsignal (H$_0$) aufnehmen, um die nominale Taktfrequenz (f$_0$) des aufgenommenen plesiochronen Signals (s$_1$) auf die vorbestimmte Taktfrequenz zu erhöhen, um durch Ausrichtung das plesiochrone Signal (s$_1$) zu einem ausgerichteten Signal (s'$_1$) zu synchronisieren, dadurch gekennzeichnet, daß die Mittel (5) zur Regeneration des Taktsignals logische Mittel (50, 51, 52, 53), um periodisch einen Impuls im lokalen Zeitsteuersignal (h) abhängig von einer Phasenverschiebung zwischen dem regenerierten Taktsignal (H$_0$) und dem lokalen Zeitsteuersignal (h) zu unterdrücken, um ein Zwischenzeitsteuersignal (h$_0$) mit einem periodisch unterdrückten Impuls im Vergleich zum lokalen Zeitsteuersignal (h) zu erzeugen, und logische Mittel (54) umfassen, um das Zwischenzeitsteuersignal (h$_0$) in der Frequenz durch 2N zu dem regenerierten Taktsignal (H$_0$) zu teilen.

2. Synchronisierschaltung nach Anspruch 1, dadurch gekennzeichnet, daß die Mittel zur Unterdrückung der Mittel (3, 50) zum Gleichrichten des plesiochronen Signals mit bipolarem Kode (s$_1$) zu einem gleichgerichteten Signal, eine erste Kippschaltung (51), aufweisend einen Eingang (D1), der ein Taktsignal (H'$_0$), das in bezug auf das regenerierte Taktsignal (H$_0$) um $\pi/2$ phasenverschoben ist und durch die Mittel zur Frequenzteilung (54) geliefert wird, und einen das gleichgerichtete Signal aufnehmenden Zeitsteuereingang (C1), eine zweite Kippschaltung (52), aufweisend einen mit einem Ausgang (Q1) der ersten Kippschaltung (51) verbundenen Eingang (D2), einen das lokale Zeitsteuersignal (h) aufnehmenden Zeitsteuereingang (C2) und einen Ausgang (Q2), der mit einem auf "1" (RA1) rückgestellten Eingang der ersten Kippschaltung (51) verbunden ist, und ein UND-Gatter (53) umfassen, aufweisend einen das lokale Zeitsteuersignal (h) aufnehmenden Eingang (530), einen mit dem Ausgang (Q2) der zweiten Kippschaltung (52) verbundenen weiteren Eingang (53E) und einen das Zwischenzeitsteuersignal (h$_0$) an einen Eingang (540) der Mittel zur Frequenzteilung (54) anlegenden Ausgang (531).

3. Synchronisierschaltung nach Anspruch 1 oder 2, dadurch gekennzeichnet, daß das durch den Oszillator (70) erzeugte lokale Zeitsteuersignal eine Frequenz gleich Kh aufweist, wobei K eine ganze Zahl gleich oder größer als die Einheit ist, und daß die Mittel zur Frequenzteilung (54) durch 2NK in der Frequenz teilen.

4. Synchronisierschaltung nach Anspruch 3, dadurch gekennzeichnet, daß sie einen mit dem Oszillator (70) verbundenen ersten Frequenzteiler durch 2K (71) und weitere Frequenzteiler (72, 73, 74) umfaßt, die mit dem ersten Teiler verbunden sind, um geeignete Zeitsteuersignale zu generieren, um Operationen zur Ausrichtung und Multiplexbearbeitung der plesiochronen Signale (s$_1$ bis s$_4$) zu steuern.

5. Synchronisierschaltung nach einem beliebigen der Ansprüche 1 bis 4, dadurch gekennzeichnet, daß der bipolare Kode ein bipolarer Kode mit hoher Dichte HDBn ist.

## Claims

1. Synchronizing circuit ($1_1$) in a multiplexer multiplexing N plesiochronous digital signals ($s_1$ to $s_N$) having a nominal timing frequency ($f_0$) susbtantially less than a predetermined timing frequency h/(2N) into a resultant signal having a timing frequency h/2, comprising an oscillator (70) supplying a local clock signal (h), means (5) receiving the local clock signal and one ($s_1$) of said plesiochronous signals coded in a bipolar code for regenerating a timing signal ($H_0$) peculiar to said plesiochronous signal ($s_1$) and having significant times (rise fronts) synchronous with significant times of the local clock signal (h), and transcoding, justifying and storing means (4, 6) receiving said plesiochronous signal ($s_1$) and said regenerated timing signal ($H_0$) for raising the nominal timing frequency ($f_0$) of the received plesiochronous signal to the predetermined timing frequency to synchronize said plesiochronous signal by justification into a justified signal ($s'_1$), characterized in that the timing signal regenerating means (5) comprise logic means (50, 51, 52, 53) for periodically deleting a pulse in the local clock signal (h) in terms of a phase-shift between the regenerated timing signal ($H_0$) and the local clock signal (h) to produce an intermediate clock signal ($h_0$) having a periodically deleted pulse comparatively with said local clock signal (h), and logic means (54) for dividing the intermediate clock signal ($h_0$) in frequency by 2N into the regenerated timing signal ($H_0$).

2. Synchronizing circuit according to claim 1, characterized in that said deleting means comprise means (3, 50) for rectifying said bipolar coded plesiochronous signal ($s_1$) into a rectified signal, a first flip-flop (51) having an input (D1) receiving a timing signal ($H'_0$) out of phase by $\pi/2$ with respect to the regenerated clock signal ($H_0$) and supplied by said frequency dividing means (54), and a clock input (C1) receiving said rectified signal, a second flip-flop (52) having an input (D2) connected to an output (Q1) of the first flip-flop (51), a clock input (C2) receiving the local clock signal (h) and an output (Q2) connected to a preset input (RA1) of the first flip-flop (51), and an AND gate (53) having an input (530) receiving the local clock signal (h), another input (53E) connected to the output of the second flip-flop (52) and an output (531) feeding said intermediate clock signal ($h_0$) to an input (540) of the frequency dividing means (54).

3. Synchronizing circuit according to claim 1 or 2, characterized in that the local clock signal supplied by the oscillator (70) has a frequency equal to Kh, where K is an integer greater than or equal to unity, and in that the frequency dividing means (54) divide in frequency by 2NK.

4. Synchronizing circuit according to claim 3, characterized in that it comprises a first divider-by-2K frequency divider (71) connected to the oscillator (70), and other frequency dividers (72, 73, 74) connected to the first divider for deriving clock signals intended for controlling justification and multiplexing operations on the plesiochronous signal ($s_1$ to $s_4$).

5. Synchronizing circuit according to any one of claims 1 to 4, characterized in that the bipolar code is an HDBn high density bipolar code.

FIG.1

## FIG.2

EP 0 165 122 B1